# EUROPÄISCHE PATENTANMELDUNG

(11) **EP 4 575 092 A1**
(43) Veröffentlichungstag der Anmeldung: **25.06.2025**
(21) Anmeldenummer: 24215001.9
(22) Anmeldetag: 25.11.2024
(51) Int. Cl.: E01C 19/26, E01C 19/00, G05D 1/229, G05D 1/646

(54) **SELBSTFAHRENDE BODENBEARBEITUNGSMASCHINE UND VERFAHREN ZUM BETREIBEN EINER SELBSTFAHRENDEN BODENBEARBEITUNGSMASCHINE**

(30) Priorität: 20.12.2023 DE 102023135898
(71) Anmelder: Hamm AG, 95643 Tirschenreuth (DE)
(72) Erfinder: Patzner, Hans-Peter, Tirschenreuth (DE)
(74) Vertreter: Ruttensperger Lachnit Trossin Gomoll

(57) **Zusammenfassung**

Eine selbstfahrende Bodenbearbeitungsmaschine, insbesondere Bodenverdichter, umfasst ein Lenksystem (27) mit einem von einer Bedienperson zu betätigenden Lenkorgan (26) und wenigstens einem Lenkaktuator (30) sowie eine Ansteueranordnung (28) zum Ansteuern wenigstens eines Lenkaktuators (30) auf der Grundlage einer Betätigung des Lenkorgans (26). Die Ansteueranordnung (28) ist dazu ausgebildet, bei Bewegung der Bodenbearbeitungsmaschine (10) in einer ersten Bewegungsrichtung (R₁), einen bei der Bewegung der Bodenbearbeitungsmaschine (10) in der ersten Bewegungsrichtung (R₁) zurückgelegten Weg (W) repräsentierende Weginformation zu erzeugen, und bei Bewegung der Bodenbearbeitungsmaschine (10) in einer der ersten Bewegungsrichtung (R₁) im Wesentlichen entgegengesetzten zweiten Bewegungsrichtung (R₂), den wenigstens einen Lenkaktuator (30) auf der Grundlage der Weginformation anzusteuern.

## Beschreibung

Die vorliegende Erfindung betrifft eine beispielsweise als Bodenverdichter ausgebildete selbstfahrende Bodenbearbeitungsmaschine sowie ein Verfahren zum Betreiben einer selbstfahrenden Bodenbearbeitungsmaschine bei der Durchführung eines Bodenbearbeitungsvorgangs.

Bei der Durchführung von Bodenbearbeitungsvorgängen ist es oftmals erforderlich, eine Bodenbearbeitungsmaschine auf dem zu bearbeitenden Boden wiederholt in im Wesentlichen einander entgegengesetzten Bewegungsrichtungen hin und her zu bewegen. Beispielsweise ist es beim Verdichten von Asphaltmaterial erforderlich, durch wiederholtes Überfahren des ausgebrachten Asphaltmaterials einen vorbestimmten, im Wesentlichen gleichmäßigen Verdichtungsgrad zu erreichen.

Bodenbearbeitungsmaschinen sind im Allgemeinen derart aufgebaut, dass in einem Bedienstand ein Sitz oder/und ein Arbeitsstand für eine Bedienperson derart positioniert ist, dass die Bedienperson im Betrieb einer Bodenbearbeitungsmaschine in einer vorbestimmten Richtung, im Allgemeinen in Richtung Vorwärtsfahrt der Bodenbearbeitungsmaschine, ausgerichtet ist. Bei Bewegung einer derartigen Bodenbearbeitungsmaschine in der entgegengesetzten Richtung, also beispielsweise in Rückwärtsfahrtrichtung, muss die Bedienperson einerseits die für eine Vorwärtsfahrt ausgerichteten Betätigungsorgane, also beispielsweise ein Lenkorgan zum Lenken der Bodenbearbeitungsmaschine und ein Fahrorgan zum Vorgeben der Fahrgeschwindigkeit der Bodenbearbeitungsmaschine, betätigen, andererseits jedoch in der aktuellen Fahrtrichtung, also beispielsweise der Rückwärtsfahrtrichtung, blicken, um den zu bearbeitenden Boden sehen zu können und dementsprechend insbesondere das Lenkorgan in geeigneter Weise betätigen zu können.

Es ist die Aufgabe der vorliegenden Erfindung, eine Bodenbearbeitungsmaschine, insbesondere Bodenverdichter, und ein Verfahren zum Betreiben einer Bodenbearbeitungsmaschine vorzusehen, mit welchen eine Bewegung der Bodenbearbeitungsmaschine in zueinander entgegengesetzten Bewegungsrichtungen erfordernde Bodenbearbeitungsvorgänge leichter und mit größerer Präzision durchführbar sind.

Gemäß einem ersten Aspekt der vorliegenden Erfindung wird diese Aufgabe gelöst durch eine selbstfahrende Bodenbearbeitungsmaschine, insbesondere Bodenverdichter, umfassend:
- ein Lenksystem mit einem von einer Bedienperson zu betätigenden Lenkorgan und wenigstens einem Lenkaktuator,
- eine Ansteueranordnung zum Ansteuern des wenigstens eines Lenkaktuators auf der Grundlage einer Betätigung des Lenkorgans,
wobei die Ansteueranordnung dazu ausgebildet ist:
- bei Bewegung der Bodenbearbeitungsmaschine in einer ersten Bewegungsrichtung, einen bei der Bewegung der Bodenbearbeitungsmaschine in der ersten Bewegungsrichtung zurückgelegten Weg repräsentierende Weginformation zu erzeugen,
- bei Bewegung der Bodenbearbeitungsmaschine in einer der ersten Bewegungsrichtung im Wesentlichen entgegengesetzten zweiten Bewegungsrichtung, den wenigstens einen Lenkaktuator auf der Grundlage der Weginformation anzusteuern.

Die erfindungsgemäß aufgebaute Bodenbearbeitungsmaschine ist grundsätzlich so konzipiert, dass die Lenkung derselben auf der Grundlage der durch eine Bedienperson vorgenommenen Manipulation eines Lenkorgans, also beispielsweise eines Lenkrades, erfolgt. Während der Durchführung eines gemäß der Lenkvorgabe einer Bedienperson geführten Bodenbearbeitungsvorgangs kann der dabei zurückgelegte Weg aufgezeichnet werden und bei einer nachfolgenden Bewegung der Bodenbearbeitungsmaschine in entgegengesetzter Richtung als Referenz für eine durch die Ansteuerungsmaßnahmen der Ansteueranordnung automatisiert durchgeführte Lenkung genutzt werden.

Dies bedeutet, dass beispielsweise während der Vorwärtsfahrt einer Bodenbearbeitungsmaschine eine Bedienperson lenkt und während der auf die Vorwärtsfahrt folgenden Rückwärtsfahrt der Bodenbearbeitungsmaschine die Ansteueranordnung unter Verwendung des während der Vorwärtsfahrt zurückgelegten Wegs als Referenz lenkt. Durch die Verwendung dieser Referenz in einem automatisierten Lenkprozess wird es möglich, die Bodenbearbeitungsmaschine beispielsweise bei der Rückwärtsfahrt exakt zu lenken und somit den durchzuführenden Bodenbearbeitungsvorgang mit höherer Präzision durchzuführen. Für eine Bedienperson bringt dies eine wesentliche körperliche Entlastung mit sich.

Die Bodenbearbeitungsmaschine kann ein Positionserfassungssystem zum Bereitstellen von eine Position der Bodenbearbeitungsmaschine während einer Bewegung der Bodenbearbeitungsmaschine repräsentierender Positionsinformation umfassen, und die Ansteueranordnung kann dazu ausgebildet sein, die Weginformation beruhend auf der Positionsinformation zu erzeugen,

Für eine präzise Erfassung der Position der Bodenbearbeitungsmaschine kann das Positionserfassungssystem dazu ausgebildet sein, die Positionsinformation durch Kommunikation mit einem funkgestützten Positionsidentifizierungssystem zu erzeugen. Ein derartiges funkgestütztes Positionsidentifizierungssystem kann beispielsweise satellitengestützt arbeiten oder/und kann ein im Bereich einer Baustelle errichtetes und entsprechende Positionssignale erzeugendes Funksystem nutzen.

Alternativ oder zusätzlich kann die Ansteueranordnung dazu ausgebildet sein, die Weginformation auf der Grundlage von einen Lenkzustand der Bodenbearbeitungsmaschine repräsentierender Lenkinformation, vorzugsweise Lenkwinkelinformation, und einen Bewegungszustand der Bodenbearbeitungsmaschine repräsentierender Bewegungsinformation, vorzugsweise Geschwindigkeitsinformation, zu erzeugen. Da im Allgemeinen zu erwarten ist, dass bei Bearbeitungsmaschinen wie zum Beispiel Bodenverdichtern die Positionsbestimmung auf der Grundlage der Lenkinformation und der Bewegungsinformation beeinträchtigender Schlupf im Betrieb nicht auftritt, können auch auf diese Art und Weise sehr präzise die momentane Position bzw. der im Verlaufe der Bewegung der Bodenbearbeitungsmaschine zurückgelegte Weg bestimmt werden.

Insbesondere bei der Verdichtung von Asphaltmaterial ist es vorteilhaft, wenn bei zwei unmittelbar aufeinander folgenden Überfahrten ein Bodenverdichter nicht exakt in der gleichen Fahrspur bewegt wird, um dadurch das Entstehen von Kanten im Übergang zu dem noch weniger verdichteten Asphaltmaterial zu vermeiden. Um dies auch bei der teilweise automatisiert durchgeführten Lenkung der Bodenbearbeitungsmaschine berücksichtigen zu können, wird vorgeschlagen, dass die Ansteueranordnung dazu ausgebildet ist, den wenigstens einen Lenkaktuator bei Bewegung in der zweiten Bewegungsrichtung auf der Grundlage der Weginformation zur Bewegung der Bodenbearbeitungsmaschine mit einem Versatz zu dem durch die Weginformation repräsentierten Weg bei Bewegung in der ersten Bewegungsrichtung anzusteuern.

Unter bestimmten Umständen kann es erforderlich oder vorteilhaft sein, die automatisiert erfolgende Ansteuerung des wenigstens einen Lenkaktuators zu übersteuern. Um dies zu erreichen, kann die Ansteueranordnung dazu ausgebildet sein, bei Vorliegen einer Übersteuern-Information die Ansteuerung des wenigstens einen Lenkaktuators auf der Grundlage der Weginformation zu beenden.

Die Übersteuern-Information kann beispielsweise eine eine Lenkbetätigung des Lenkorgans repräsentierende Lenkeingriffsinformation umfassen. Betätigt eine Bedienperson während der automatisiert ablaufenden Lenkung das Lenkorgan beispielsweise in einem über eine Mindestbetätigung hinausgehenden Ausmaß, wird die automatisiert durchgeführte Lenkung beendet und die Bodenbearbeitungsmaschine wird wieder entsprechend der durch die Bedienperson vorgenommenen Lenkbetätigung gelenkt. Dies kann beispielsweise erfolgen, wenn während der Bodenbearbeitung ein zuvor nicht vorhandenes Hindernis zu umfahren ist. Auch eine beispielsweise von einer Bedienperson vorgenommene Deaktivierung der Ansteueranordnung zum Ansteuern des wenigstens einen Lenkaktuators auf der Grundlage der Weginformation repräsentierende Deaktivierungsfunktion kann eine derartige Übersteuern-Information bilden.

Gemäß einem weiteren Aspekt wird die eingangs genannte Aufgabe gelöst durch ein Verfahren zum Betreiben einer selbstfahrenden Bodenbearbeitungsmaschine, insbesondere Bodenverdichter, beispielsweise einer selbstfahrenden Bodenbearbeitungsmaschine mit dem erfindungsgemäßen Aufbau, wobei die Bodenbearbeitungsmaschine ein Lenksystem mit einem von einer Bedienperson zu betätigenden Lenkorgan und eine Ansteueranordnung zum Ansteuern wenigstens eines Lenkaktuators auf der Grundlage einer Betätigung des Lenkorgans umfasst, wobei das Verfahren die Maßnahmen umfasst:
a) bei Bewegung der Bodenbearbeitungsmaschine in einer ersten Bewegungsrichtung, Erzeugen einer den bei der Bewegung der Bodenbearbeitungsmaschine in der ersten Bewegungsrichtung zurückgelegten Weg repräsentierenden Weginformation,
b) bei Bewegung der Bodenbearbeitungsmaschine in einer der ersten Bewegungsrichtung im Wesentlichen entgegengesetzten zweiten Bewegungsrichtung, Ansteuern des wenigstens einen Lenkaktuators vermittels der Ansteueranordnung auf der Grundlage der Weginformation.

Bei diesem Verfahren können die Maßnahmen a) und b) wiederholt alternierend durchgeführt werden, so dass ein Bereich eines zu bearbeitenden Bodens wiederholt überfahren und dabei bearbeitet werden kann. Bei diesen wiederholten Überfahrten erfolgt jede zweite Überfahrt mit automatisiert gelenkter Bodenbearbeitungsmaschine.

Werden die Maßnahmen a) und b) wiederholt aufeinanderfolgend durchgeführt, kann bei einer Durchführung der Maßnahme a) die erste Bewegungsrichtung von der ersten Bewegungsrichtung bei einer vorangehenden Durchführung der Maßnahme a) abweichen. Dies ermöglicht es, mit der erfindungsgemäß teilautomatisiert durchgeführten Lenkung einer Bodenbearbeitungsmaschine ein vergleichsweise großes Bodenareal zu bearbeiten.

Bei der Maßnahme a) kann die Ansteueranordnung den wenigstens einen Lenkaktuator auf der Grundlage einer eine Betätigung des Lenkorgans repräsentierenden Lenkinformation ansteuern, so dass in dieser Phase der Bodenbearbeitung die Lenkung nach Maßgabe eine Bedienperson erfolgt.

Die Aufzeichnung des nachfolgend als Referenz für die automatisierte Lenkung der Bodenbearbeitungsmaschine zu nutzenden Wegs kann beispielsweise dadurch eingeleitet werden, dass bei der Maßnahme a) das Erzeugen der Weginformation bei Erzeugung eines Weginformation-Erzeugungsbefehls gestartet wird. Ein derartiger Weginformation-Erzeugungsbefehl kann beispielsweise durch die Betätigung eines entsprechenden Schaltorgans vermittels einer Bedienperson generiert werden.

Sollen die Maßnahmen a) und b) wiederholt durchgeführt werden, kann weiter vorgesehen sein, dass bei der Maßnahme a) das Erzeugen der Weginformation bei einer Bewegungsrichtungsumkehr der Bodenbearbeitungsmaschine nach Bewegung der Bodenbearbeitungsmaschine in der zweiten Bewegungsrichtung bei einer unmittelbar vorangehenden Durchführung der Maßnahme b) gestartet wird. Die am Ende der Durchführung der Maßnahme b) erfolgende Bewegungsrichtungsumkehr indiziert, dass wieder in einen durch eine Bedienperson geführten Lenkbetrieb übergegangen wird und dabei durch Erzeugen der Weginformation erneut eine Referenz für einen nachfolgenden automatisiert durchgeführten Lenkbetrieb erzeugt werden kann. Es ist dann nicht erforderlich, immer dann, wenn in einen durch eine Bedienperson geführten Lenkbetrieb übergegangen wird, manuell die Bereitstellung der Weginformation zu starten

Um bei zwei unmittelbar aufeinander folgenden und in entgegengesetzten Richtungen verlaufenden Überfahrten das Bewegen der Bodenbearbeitungsmaschine in exakt der gleichen Spur vermeiden zu können, wird vorgeschlagen, dass bei der Maßnahme b) die Ansteueranordnung den wenigstens einen Lenkaktuator auf der Grundlage der Weginformation zur Bewegung der Bodenbearbeitungsmaschine mit einem Versatz zu dem durch die Weginformation repräsentierten Weg bei Bewegung der Bodenbearbeitungsmaschine in der ersten Bewegungsrichtung bei Durchführung der Maßnahme a) ansteuert.

Der Versatz kann vor Durchführung der Maßnahme b), vorzugsweise vor Durchführung der Maßnahme a), beispielsweise vor Beginn eines Bodenbearbeitungsvorgangs, bestimmt werden. Weiter ist es für ein gleichmäßiges Bearbeitungsergebnis vorteilhaft, wenn der Versatz bei Durchführung der Maßnahme b) unverändert bleibt.

Um ohne weitergehende manuelle Interaktion den automatisierten Lenkbetrieb einzuleiten, wird vorgeschlagen, dass die Maßnahme b) bei einer Bewegungsrichtungsumkehr der Bodenbearbeitungsmaschine nach Bewegung der Bodenbearbeitungsmaschine in der ersten Bewegungsrichtung bei einer unmittelbar vorangehenden Durchführung der Maßnahme a) gestartet wird.

Da für die Durchführung des automatisierten Lenkbetriebs das Vorhandensein einer die Bewegungsrichtung definierenden Referenz erforderlich ist, wird weiter vorgeschlagen, dass die Maßnahme b) beendet wird, wenn bei Bewegung der Bodenbearbeitungsmaschine in der zweiten Bewegungsrichtung bei Durchführung der Maßnahme b) eine einer Startposition der Bodenbearbeitungsmaschine bei einer unmittelbar vorangehenden Durchführung der Maßnahme a) zugeordnete Endposition der Bodenbearbeitungsmaschine erreicht wird.

Um bei Erreichen dieser Endposition sicherstellen zu können, dass die Bodenbearbeitungsmaschine in geeigneter Weise weiterbetrieben wird, kann bei oder/und nach Erreichen der Endposition:
- ein das Erreichen der Endposition indizierender Hinweis, vorzugsweise optischer Hinweis oder/und akustischer Hinweis oder/und Vibrations-Hinweis, erzeugt werden,
   oder/und
- die Ansteueranordnung den wenigstens einen Lenkaktuator auf der Grundlage einer eine Betätigungsstellung des Lenkorgans repräsentierenden Lenkinformation ansteuern.

Damit wird einer Bedienperson einerseits die Möglichkeit gegeben, zuverlässig zu erkennen, dass eine derartige Endposition erreicht worden ist. Andererseits kann der Bedienperson wieder die Verantwortung für das Lenken der Bodenbearbeitungsmaschine übertragen werden.

Weiter kann die Maßnahme b) bei Erzeugung einer Übersteuern-Information beendet werden, beispielsweise um das Entstehen kritischer Situationen zu vermeiden oder grundsätzlich den Bodenbearbeitungsbetrieb zu beenden.

Beispielweise kann die Übersteuern-Information erzeugt werden durch:
- eine Betätigung des Lenkorgans während Durchführung der Maßnahme b), oder/und
- eine Deaktivierung der Ansteueranordnung zum Ansteuern des wenigstens einen Lenkaktuators auf der Grundlage der Weginformation.

Für einen die automatisierte Lenkung der Bodenbearbeitungsmaschine effizient nutzenden Betrieb kann vorgesehen sein, dass bei der Maßnahme a) die bei einer unmittelbar nachfolgenden Durchführung der Maßnahme b) zu nutzende Weginformation nur dann erzeugt wird, wenn die Bodenbearbeitungsmaschine seit Beginn der Maßnahme a) eine vorbestimmte Mindestweglänge zurückgelegt hat. Legt die Bodenbearbeitungsmaschine nur eine vergleichsweise kurze Wegstrecke von beispielsweise einigen Metern zurück, hat dies im Allgemeinen zur Folge, dass eine für die nachfolgende automatisierte Lenkung der Bodenbearbeitungsmaschine geeignete Referenz nicht vorliegt.

Bei dem erfindungsgemäßen Verfahren ist es besonders vorteilhaft, wenn die Ansteueranordnung bei der Durchführung der Maßnahmen a) und b) und nach der Beendigung der Maßnahme b) ein Antriebssystem der Bodenbearbeitungsmaschine auf der Grundlage einer eine Betätigung eines Fahrorgans repräsentierenden Fahrinformation ansteuert. Dies bedeutet, dass auch während der Durchführung der Maßnahme b), ebenso wie während Durchführung der Maßnahme a), die Ansteueranordnung lediglich unter Berücksichtigung der vermittels der Weginformation generierten Referenz die Lenkung der Bodenbearbeitungsmaschine übernimmt, nicht jedoch die Einstellung der Fahrgeschwindigkeit. Hierfür ist unabhängig von der Bewegungsrichtung der Bodenbearbeitungsmaschine und unabhängig davon, ob diese automatisiert gelenkt wird oder nicht, primär aus Sicherheitsgründen ausschließlich die Bedienperson zuständig.

Die vorliegende Erfindung wird nachfolgend mit Bezug auf die beiliegenden Figuren detailliert beschrieben. Es zeigt:
- Fig. 1: eine als Bodenverdichter ausgebildete Bodenbearbeitungsmaschine;
- Fig. 2: in prinzipieller Draufsicht eine Bodenbearbeitungsmaschine bei Bewegung in zwei zueinander entgegengesetzten Bewegungsrichtungen;
- Fig. 3: eine als Touchscreen ausgebildete Bedien/Anzeige-Einheit für eine Bodenbearbeitungsmaschine.

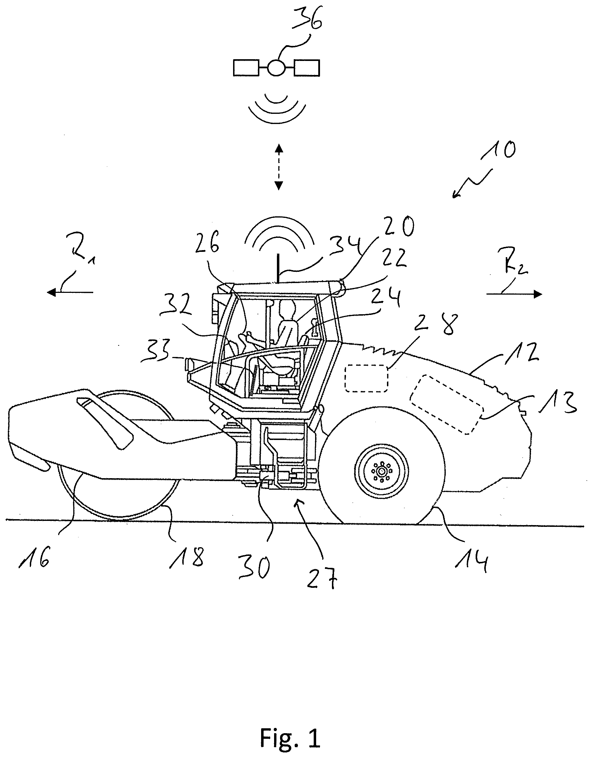

In Fig. 1 ist eine als Bodenverdichter aufgebaute selbstfahrende Bodenbearbeitungsmaschine allgemein mit 10 bezeichnet. In dem dargestellten Ausgestaltungsbeispiel umfasst die Bodenbearbeitungsmaschine 10 bzw. der Bodenverdichter einen Hinterwagen 12, an welchem ein Antriebssystem 13 mit einem Antriebsaggregat, beispielsweise Diesel-Brennkraftmaschine, vorgesehen ist, um beidseits am Hinterwagen 12 positionierte Antriebsräder 14 zur Drehung anzutreiben. Bei einer alternativen Ausgestaltungsart kann die Bodenbearbeitungsmaschine 10 auch elektromotorisch betrieben sein und beispielsweise ein elektrohydraulisches Antriebssystem 13 umfassen.

Mit dem Hinterwagen 12 ist ein Vorderwagen 16 gelenkig verbunden. Am Vorderwagen 16 ist eine Bodenbearbeitungswalze 18 drehbar getragen, so dass bei Bewegung der als Bodenverdichter ausgebildeten Bodenbearbeitungsmaschine 10 über den zu bearbeitenden Boden B, beispielsweise über zu verdichtendes Asphaltmaterial, die Bodenbearbeitungswalze 18 auf dem Boden B abrollt und diesen dabei verdichtet.

Am Hinterwagen 12 ist ferner eine Kabine 20 für eine Bedienperson 22 vorgesehen. Auf einem in der Kabine 20 positionierten Sitz 24 kann die Bedienperson 22 bei Durchführung von Bodenbearbeitungsvorgängen Platz nehmen. Dabei ist bei auf dem Sitz 24 Platz nehmender Bedienperson 22 diese so orientiert, dass sie nach vorne, also einer Vorwärtsfahrtrichtung entsprechenden ersten Richtung R₁, blickt.

In der Kabine 20 sind verschiedene Betätigungsorgane zur Betätigung der Bodenbearbeitungsmaschine 10 durch die Bedienperson 22 angeordnet. Beispielsweise kann ein als Lenkrad ausgeführtes Lenkorgan 26 eines Lenksystems 27 durch die Bedienperson 22 betätigt werden, um die Bodenbearbeitungsmaschine 10 zu lenken. Ein die Betätigungsstellung des Lenkorgans 26 erfassender Lenksensor kann eine diese Betätigungsstellung repräsentierende Lenkinformation in eine allgemein mit 28 bezeichnete Ansteueranordnung einleiten. Beruhend auf der Lenkbetätigung bzw. dem die entsprechende Lenkinformation repräsentierenden Signal des Lenksensors kann die Ansteueranordnung 28 zwischen dem Vorderwagen 16 und dem Hinterwagen 12 als Lenkaktuatoren 30 wirkende Kolben/Zylinder-Einheiten ansteuern. Durch Ausfahren bzw. Einfahren dieser Kolben/Zylinder-Einheiten kann der Winkel zwischen dem Vorderwagen 16 und dem Hinterwagen 12 verändert und dadurch die Bodenbearbeitungsmaschine 10 gelenkt werden.

In der Kabine 20 der Bodenbearbeitungsmaschine 10 sind weitere beispielsweise im Bereich eines Armaturenbretts 32 oder seitlich neben dem Sitz 24 positionierte Betätigungsorgane vorgesehen. So ist beispielsweise ein Fahrorgan 33, allgemein auch als Fahrhebel bezeichnet, vorgesehen, dessen Betätigung durch die Bedienperson 22 die Geschwindigkeit und auch die Bewegungsrichtung der Bodenbearbeitungsmaschine 10 steuert. Ein die Betätigung dieses Fahrorgan 33 repräsentierendes Signal kann ebenfalls in die Ansteueranordnung 28 eingeleitet werden, und diese kann das Antriebssystem 13 der Bodenbearbeitungsmaschine 10 entsprechend der Richtung und dem Ausmaß der Betätigung des Fahrorgans 33 ansteuern. Wird beispielsweise das Fahrbetätigungsorgan 10 nach vorne, also in Richtung der ersten Bewegungsrichtung R₁, verschoben, so wird die Bodenbearbeitungsmaschine 10 entsprechend dem Ausmaß der Verschiebung bzw. Verschwenkung des Fahrorgans 33 in der Vorwärtsfahrtrichtung, also der ersten Bewegungsrichtung R₁, zur Bewegung angetrieben. Wird das Fahrbetätigungsorgan nach hinten verschoben bzw. verschwenkt, wird das Antriebssystem 13 der Bodenbearbeitungsmaschine 10 durch die Ansteueranordnung 28 entsprechend dem Ausmaß der Verschiebung bzw. Verschwenkung zum Bewegen der Bodenbearbeitungsmaschine 10 in einer einer Rückwärtsfahrtrichtung entsprechenden zweiten Bewegungsrichtung R₂ angesteuert.

Um bei Durchführung eines Bodenbearbeitungsvorgangs Information über die Position der Bodenbearbeitungsmaschine 10 bereitstellen zu können, ist beispielsweise an der Kabine 20 ein Positionserfassungssystem 34 vorgesehen. Das Positionserfassungssystem 34 kann beispielsweise zur Funkkommunikation mit einer satellitengestützten Positionsidentifizierungssystem 36, beispielsweise GPS, ausgebildet sein, so dass mit hoher Auflösung jederzeit die momentane Positionierung der Bodenbearbeitungsmaschine 10 auf dem zu bearbeitenden Boden B repräsentierende Positionsinformation bereitgestellt werden kann.

Alternativ oder zusätzlich kann das Positionserfassungssystem 34 auch dazu ausgebildet sein, mit einem lokal errichteten Funksystem zu kommunizieren, um durch lokale Funkkommunikation Information über die Position der Bodenbearbeitungsmaschine 10 erhalten zu können. Bei einer weiteren alternativ oder zusätzlich zu verwendenden Variante kann das Positionserfassungssystem 34 dazu ausgebildet sein, allein aufgrund von im Bereich der Bodenbearbeitungsmaschine 10 bereitgestellter und den Fahrzustand derselben repräsentierender Information die Position der Bodenbearbeitungsmaschine 10 zu bestimmen. Hierzu kann beispielsweise eine den Lenkzustand der Bodenbearbeitungsmaschine 10 repräsentierende Lenkinformation genutzt werden. Diese Lenkinformation kann beispielsweise bereitgestellt sein durch das von dem dem Lenkorgan 26 zugeordneten Lenksensor ausgegebene Signal. Ferner kann hierfür eine den Bewegungszustand der Bodenbearbeitungsmaschine 10 repräsentierende Information, also insbesondere die Bewegungsgeschwindigkeit der Bodenbearbeitungsmaschine 10, genutzt werden, welche beispielsweise aus der Umdrehung der Antriebsräder 14 abgeleitet werden kann. Durch Verknüpfung der Lenkinformation und der Bewegungsinformation kann jederzeit die Position der Bodenbearbeitungsmaschine 10 bestimmt werden, wenn beispielsweise zu Beginn eines Bodenbearbeitungsbetriebs die exakte Raumposition der Bodenbearbeitungsmaschine 10 bekannt ist. Aus der Lenkinformation und der Bewegungsinformation kann der bei Durchführung eines Bodenbearbeitungsvorgangs zurückgelegte Weg der Bodenbearbeitungsmaschine 10 auch bestimmt bzw. aufgezeichnet werden, ohne dass dafür die exakte Position der Bodenbearbeitungsmaschine am Beginn des Bodenbearbeitungsvorgansg bekannt sein muss.

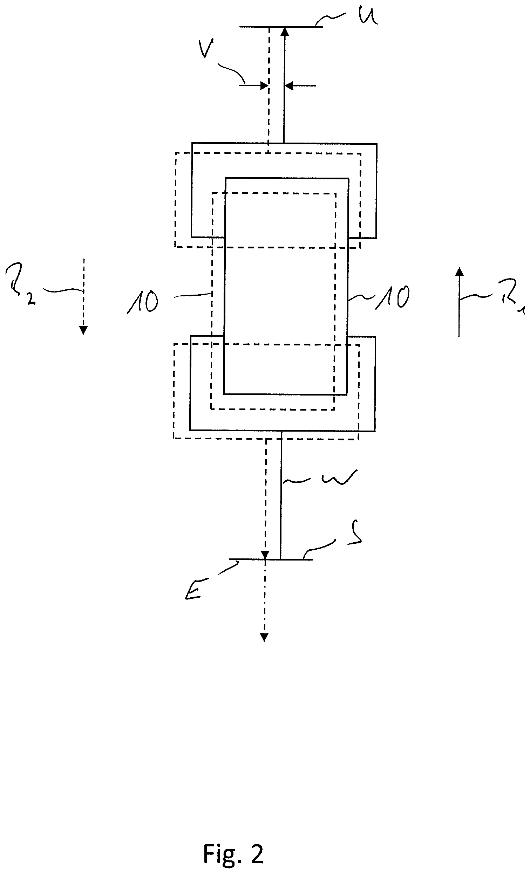

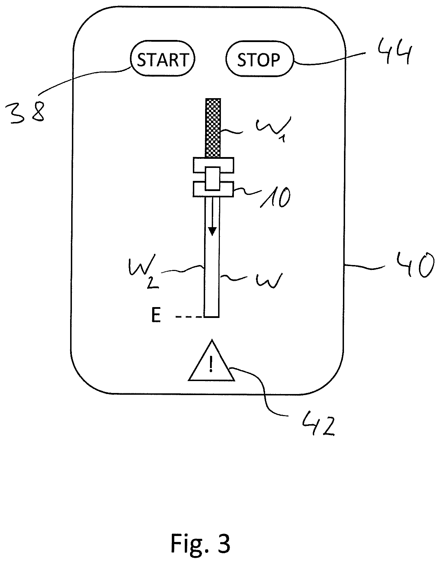

Nachfolgend wird auch mit Bezug auf die Fig. 2 und 3 die Durchführung eines Bodenbearbeitungsbetriebs beschrieben.

Bei dem in Fig. 2 veranschaulichten Beispiel soll vermittels der hier mit zwei Bodenbearbeitungswalzen aufgebauten Bodenbearbeitungsmaschine 10, ausgehend von einer Startposition S, ein Bodenbearbeitungsvorgang durch Bewegen der Bodenbearbeitungsmaschine in der ersten Bewegungsrichtung R₁ durchgeführt werden. Zu Beginn des Bodenbearbeitungsvorgangs, also beispielsweise bei oder vor dem Losfahren aus der Startposition S oder bei Erreichen der Startposition S bei sich bereits im Wesentlichen in der ersten Bewegungsrichtung R₁ bewegender Bodenbearbeitungsmaschine 10, wird durch die Bedienperson 22 durch Drücken eines Start-Schalters 38 an einer beispielsweise als Touchscreen ausgeführten Bedien/AnzeigeEinheit 40 ein Weginformation-Erzeugungsbefehl generiert. Die Bedien/AnzeigeEinheit 40 kann beispielsweise im Bereich des Armaturenbretts 32 angeordnet sein.

Durch Betätigung des Lenkorgans 26 und des Fahrorgans 33 vermittels der Bedienperson 22 bewegt sich die Bodenbearbeitungsmaschine 10, ausgehend von der Startposition S, dann in der ersten Bewegungsrichtung R₁, also beispielsweise einer Vorwärtsfahrtrichtung, bis eine beispielsweise von der Bedienperson gewählte oder eine vorgegebene Umkehrposition erreicht ist. Während der Bewegung von der Startposition S zur Umkehrposition U wird der von der Bodenbearbeitungsmaschine 10 zurückgelegte Weg W aufgezeichnet. Dies kann beispielsweise auf der Grundlage der während der Bewegung der Bodenbearbeitungsmaschine 10 beispielsweise periodisch erfassten bzw. ermittelten Position oder/und durch Verknüpfung der Lenkinformation und der Bewegungsinformation erfolgen. Die von der Ansteueranordnung 28 generierte Weginformation kann beispielsweise in einem in der Ansteueranordnung 28 vorhandenen überschreibbaren Speicher abgespeichert werden.

Bei Erreichen der Umkehrposition U beendet die Bedienperson 22 das Bewegen der Bodenbearbeitungsmaschine 10 in der ersten Bewegungsrichtung R₁ durch entsprechende Betätigung des Fahrorgans 33.

Ausgehend von der Umkehrposition U soll die Bodenbearbeitungsmaschine 10 nachfolgend wieder im Wesentlichen entlang des gleichen Wegs W zurückbewegt werden, der vorangehend bei Bewegung in der ersten Bewegungsrichtung R₁ überfahren wurde. Zur Bewegung in einer der ersten Bewegungsrichtung R₁ im Wesentlichen entgegengesetzten zweiten Bewegungsrichtung R₂ betätigt die Bedienperson 22 das Fahrorgan 33 entsprechend, so dass die Bodenbearbeitungsmaschine 10 dann in der Rückwärtsfahrtrichtung angetrieben wird. Den bei der vorangehenden Überfahrt aufgezeichneten Weg W bzw. die diesen repräsentierende Weginformation nutzt die Ansteueranordnung 28 mit Beginn der Bewegung in der zweiten Bewegungsrichtung R₂, um die Lenkaktuatoren 30 so anzusteuern, dass die Bodenbearbeitungsmaschine 10 beispielsweise exakt auf dem gleichen Weg W zurück bewegt wird, den diese vorangehend bei der Bewegung in der ersten Bewegungsrichtung R₁ zurückgelegt hat. Ein Lenkeingriff durch die Bedienperson 22 ist in dieser Phase des Bodenbearbeitungsvorgangs nicht erforderlich. Die Bedienperson 22 gibt lediglich die Fahrgeschwindigkeit durch entsprechende Verschiebung bzw. Verschwenkung des Fahrorgans 33 vor. Beispielsweise kann auch vorgesehen sein, dass durch die Bedienperson 22 vorgegeben wird, ob bzw. in welchem Ausmaß ein Schwingungserzeugungsmechanismus an einer oder an beiden Bodenbearbeitungswalzen aktiviert werden soll.

Bei Bewegung entlang des zuvor zurückgelegten Wegs W erreicht die Bodenbearbeitungsmaschine 10 eine der vorangehenden Startpositionen S entsprechende Endposition E. Die Bewegung der Bodenbearbeitungsmaschine 10 entlang des Wegs W auf der Grundlage der diesen repräsentierenden Weginformation in Richtung auf die Endposition E zu kann in einem entsprechenden Display der Bedien/Anzeige-Einheit 40 angezeigt werden. Dabei können beispielsweise der bereits zurückgelegte Weg W₁ und der in Richtung zur Endposition E noch zurückzulegende Weg W₂ jeweils als die Länge dieses Weges repräsentierender Wegbalken angezeigt werden.

Erreicht die in diesem Display auch veranschaulichte Bodenbearbeitungsmaschine 10 die Endposition E, kann dies der Bedienperson 22 durch einen entsprechenden Hinweis kommuniziert werden. Dieser Hinweis kann, wie dies in Fig. 3 veranschaulicht ist, durch ein optisch wahrnehmbares Warnsymbol 42 repräsentiert sein. Alternativ oder zusätzlich kann auch ein akustischer Hinweis oder/und ein Vibrations-Hinweis erzeugt werden. Die Erzeugung dieses Hinweises kann auch bereits kurz vor Erreichen der Endposition E einsetzen, um zu gewährleisten, dass bei Erreichen der Endposition E die Bedienperson 22 dazu bereit ist, wieder die vollständige Führung der Bodenbearbeitungsmaschine 10 zu übernehmen.

Hierzu ist die Ansteueranordnung 28 derart ausgebildet, dass bei Erreichen der Endposition E der in diesem Moment eingestellte Lenkwinkel unverändert beibehalten wird, also eine die Verstellung der Lenkaktuatoren 30 bewirkende Ansteuerung derselben unterbleibt. Gleichzeitig wird die Lenkfunktion wieder an das Lenkorgan 26 übertragen, so dass mit Erreichen der Endposition E die Bedienperson 22 wieder für das Lenken verantwortlich ist. Beispielsweise kann auch vorgesehen sein, dass mit Erreichen der Endposition E und dem Beenden des automatisierten Lenkvorgangs die Ansteuerung der Lenkaktuatoren 30 auf der Grundlage der in diesem Moment vorhandenen Lenkposition des Lenkorgans 26 erfolgt. Da auch bei Bewegung in der zweiten Bewegungsrichtung R₂ die Ansteueranordnung 28 nur das Antriebssystem 13, nicht jedoch das Lenksystem 27 automatisiert betreibt bzw. ansteuert, erfolgt auch nach Erreichen der Endposition E ein automatisierter Eingriff in die Ansteuerung des Antriebssystems 13 nicht. Dieses wird nach wie vor ausschließlich unter der Vorgabe der durch die Bedienperson 22 vorgenommenen Betätigung des Fahrorgans 33 angesteuert, so dass beispielsweise bei zunächst ausbleibender Veränderung der Betätigung des Fahrorgans 33 die Bodenbearbeitungsmaschine 10 sich über die Endposition E bzw. die vorherige Startposition S hinaus bewegen kann.

Die Fig. 2 veranschaulicht, dass bei der Bewegung in der zweiten Bewegungsrichtung R₂ die Bodenbearbeitungsmaschine 10 mit einem seitlichen Versatz V bezüglich des bei der vorangehenden Bewegung in der ersten Bewegungsrichtung R₁ zurückgelegten Wegs W bewegt werden kann. Die Einführung eines derartigen Versatzes V, dessen Größe im Bereich von wenigen Zentimetern, also beispielsweise 5 bis 10 cm, bis zu 1 Meter oder mehr betragen kann, bewirkt, dass bei unmittelbar aufeinander folgenden Überfahrten die Bodenbearbeitungsmaschine 10 nicht exakt den gleichen Bereich des Bodens B bearbeitet bzw. verdichtet. Insbesondere beim Verdichten von Asphaltmaterial wird dabei das Entstehen von Kanten im Übergang zu dem noch nicht oder weniger stark verdichteten Bereich des Bodens B vermieden.

Der Versatz V kann beispielsweise vor Beginn des Bodenbearbeitungsvorgangs, also vor dem Betätigen des Start-Schalters 38, vorgegeben bzw. durch die Bedienperson 22 eingegeben werden, kann alternativ aber auch durch einen fest eingestellten Wert repräsentiert sein. Der Versatz V kann jedoch auch erst unmittelbar vor Erreichen der Umkehrposition U eingegeben werden. Ist bei Erreichen der Umkehrposition U kein Versatz V eingegeben bzw. definiert, kann durch die Ansteueranordnung 28 die Bodenbearbeitungsmaschine 10 in der zweiten Bewegungsrichtung R₂ exakt auf dem gleichen Weg W zurückbewegt werden, der auch bei der vorangehenden Bewegung in der ersten Bewegungsrichtung R₁ gefahren wurde. Vorteilhafterweise bleibt ein einmal vorgegebener Versatz V während der Bewegung in der zweiten Bewegungsrichtung R₂ von der Umkehrposition U zur Endposition E unverändert.

Bei oder nach Erreichen der Endposition E wird durch entsprechende Betätigung des Fahrorgans 33 die Bodenbearbeitungsmaschine 10 wieder zum Stillstand gebracht. Durch Betätigung des Fahrorgans 33 derart, dass die Bodenbearbeitungsmaschine 10 sich wieder in der Vorwärtsfahrtrichtung, also der ersten Bewegungsrichtung R₁, bewegt, wird bei weiterhin betätigtem Start-Schalter 38 mit der Bewegungsrichtungsumkehr bzw. dem Beginn der erneuten Bewegung in der ersten Bewegungsrichtung R₁ wieder der im Verlauf dieser Bewegung zurückgelegte Weg W aufgezeichnet. Da bei dieser Bewegung die Bodenbearbeitungsmaschine 10 wieder durch die Bedienperson 22 gelenkt wird, ist es möglich, dass der bei der zweiten bzw. jeder weiteren Überfahrt in der ersten Bewegungsrichtung R₁, also der Vorwärtsfahrtrichtung, zurückgelegte Weg W nicht exakt dem bei einer vorherigen Überfahrt in dieser Bewegungsrichtung zurückgelegten Weg W entspricht. Dadurch wird es möglich, bei einer Vielzahl von aufeinander folgenden Überfahrten einen größeren Bereich des zu bearbeitenden bzw. zu verdichtenden Bodens zu erreichen.

Nach erneutem Erreichen einer Umkehrposition U und Betätigen des Fahrorgans 33 derart, dass die Bodenbearbeitungsmaschine 10 sich wieder in der zweiten Bewegungsrichtung R₂ zurückbewegt, kann die Bodenbearbeitungsmaschine 10 dann wieder unter der automatischen Lenkung vermittels der Ansteueranordnung 28 entlang des bei der unmittelbar vorangehenden Bewegung in der ersten Bewegungsrichtung R₁ zurückgelegten Wegs W bewegt werden, bis eine der vorherigen Startposition S entsprechende Endposition E erreicht ist.

Dieser Vorgang kann wiederholt werden, bis der zu bearbeitende Boden B in ausreichendem Ausmaß bearbeitet wurde, also beispielsweise mit einer zuvor festgelegten Anzahl an zueinander auch versetzt liegenden Überfahrten überfahren wurde. Ist dieser Zustand erreicht, kann durch Betätigen eines Stopp-Schalters 44 das Aufzeichnen des Wegs W bzw. das Ansteuern der Lenkaktuatoren 30 vermittels der Ansteueranordnung 28 beendet werden. Beispielsweise kann die Bodenbearbeitungsmaschine 10 dann zu einem anderen Ort verbracht werden, um dort einen Bodenbearbeitungsvorgang durchzuführen, oder kann bis zur Durchführung eines weiteren Bodenbearbeitungsvorgangs abgestellt werden.

Die Deaktivierung der automatisierten Ansteuerung der Lenkaktuatoren 30 kann auch erfolgen, wenn beispielsweise aufgrund unvorhergesehener Ereignisse während der Bewegung in der ersten Bewegungsrichtung R₁ oder der Bewegung in der zweiten Bewegungsrichtung R₂ ein Eingriff durch die Bedienperson 22 erforderlich ist. Diese kann dann beispielsweise durch Betätigung des Stopp-Schalters 44 die automatisierte Lenkung bzw. auch das Aufzeichnen des Wegs beenden. Erfolgt dies bei Bewegung der Bodenbearbeitungsmaschine 10 in der zweiten Bewegungsrichtung R₂, beendet die Ansteueranordnung 28 die Ansteueranordnung der Lenkaktuatoren 30, und die Bedienperson 22 ist durch entsprechende Betätigung des Lenkorgans 26 wieder für die geeignete Lenkung der Bodenbearbeitungsmaschine 10 verantwortlich.

Die automatisierte Lenkung entlang des zuvor aufgezeichneten Wegs bei Bewegung in der zweiten Bewegungsrichtung R₂ kann beispielsweise auch dann beendet werden, wenn ein Lenkeingriff durch die Bedienperson 22 erfolgt. Ein derartiger Lenkeingriff kann beispielsweise dann erkannt werden, wenn die Bedienperson 22 das Lenkorgan mit einem vorgegebenen Mindestbetätigungsausmaß betätigt. Dies kann beispielsweise der Fall sein, wenn ein Hindernis auftritt und das Weiterbewegen der Bodenbearbeitungsmaschine 10 entlang des zuvor zurückgelegten Wegs W zu einer Kollision führen könnte. Mit einem derartigen Lenkeingriff beendet die Ansteueranordnung 28 die automatisierte Ansteuerung der Lenkaktuatoren 30, und die Bedienperson 22 übernimmt mit der Betätigung des Lenkorgans 26 wieder die Führung der Bodenbearbeitungsmaschine 10.

Um eine definierte Bewegung der Bodenbearbeitungsmaschine 10 in der zweiten Bewegungsrichtung R₂ auf der Grundlage eines zuvor bei der Bewegung in der ersten Bewegungsrichtung R₁ zurückgelegten Wegs W durchführen zu können, kann weiter vorgesehen sein, dass eine derartige Weginformation als Referenz nur dann gespeichert bzw. zur Verfügung gestellt wird, wenn bei der Bewegung in der ersten Bewegungsrichtung R₁ eine vorbestimmte Mindestweglänge von beispielsweise 5 Metern zurückgelegt wurde. Wurde diese Mindestweglänge nicht erreicht, kann dies beispielsweise durch eine entsprechende Anzeige in der Bedien/Anzeige-Einheit 40 kenntlich gemacht werden, so dass die Bedienperson 22 erkennen kann, dass bei der Zurückbewegung in der zweiten Bewegungsrichtung R₂ ein automatisiertes Lenken nicht erfolgen wird.

Das Starten des Aufzeichnens der Weginformation kann bei einer alternativen Ausgestaltung bzw. Vorgehensweise auch jedes Mal dann, wenn bei einer Mehrzahl von aufeinander folgenden Überfahrten ein Übergang von der Bewegung in der zweiten Bewegungsrichtung R₂ zu einer Bewegung in der ersten Bewegungsrichtung R₁ auftritt, einen entsprechenden Weginformation-Erzeugungsbefehl beispielsweise durch Betätigung des Start-Schalters 38 erfordern.

## Patentansprüche

1. Selbstfahrende Bodenbearbeitungsmaschine, insbesondere Bodenverdichter, umfassend:
- ein Lenksystem (27) mit einem von einer Bedienperson zu betätigenden Lenkorgan (26) und wenigstens einem Lenkaktuator (30),
- eine Ansteueranordnung (28) zum Ansteuern des wenigstens eines Lenkaktuators (30) auf der Grundlage einer Betätigung des Lenkorgans (26),
wobei die Ansteueranordnung (28) dazu ausgebildet ist:
- bei Bewegung der Bodenbearbeitungsmaschine (10) in einer ersten Bewegungsrichtung (R₁), einen bei der Bewegung der Bodenbearbeitungsmaschine (10) in der ersten Bewegungsrichtung (R₁) zurückgelegten Weg (W) repräsentierende Weginformation zu erzeugen,
- bei Bewegung der Bodenbearbeitungsmaschine (10) in einer der ersten Bewegungsrichtung (R₁) im Wesentlichen entgegengesetzten zweiten Bewegungsrichtung (R₂), den wenigstens einen Lenkaktuator (30) auf der Grundlage der Weginformation anzusteuern.

2. Selbstfahrende Bodenbearbeitungsmaschine nach Anspruch 1,
**gekennzeichnet durch** ein Positionserfassungssystem (34) zum Bereitstellen von eine Position der Bodenbearbeitungsmaschine (10) während einer Bewegung der Bodenbearbeitungsmaschine (10) repräsentierender Positionsinformation, wobei die Ansteueranordnung (28) dazu ausgebildet ist, die Weginformation beruhend auf der Positionsinformation zu erzeugen,
vorzugsweise wobei das Positionserfassungssystem (34) dazu ausgebildet ist, die Positionsinformation durch Kommunikation mit einem funkgestützten Positionsidentifizierungssystem (36) zu erzeugen.

3. Selbstfahrende Bodenbearbeitungsmaschine nach Anspruch 1 oder 2,
**dadurch gekennzeichnet, dass** Ansteueranordnung (28) dazu ausgebildet ist, die Weginformation auf der Grundlage von einen Lenkzustand der Bodenbearbeitungsmaschine (10) repräsentierender Lenkinformation, vorzugsweise Lenkwinkelinformation, und einen Bewegungszustand der Bodenbearbeitungsmaschine (10) repräsentierender Bewegungsinformation, vorzugsweise Geschwindigkeitsinformation, zu erzeugen

4. Selbstfahrende Bodenbearbeitungsmaschine nach einem der Ansprüche 1-3,
**dadurch gekennzeichnet, dass** die Ansteueranordnung (28) dazu ausgebildet ist, den wenigstens einen Lenkaktuator (30) bei Bewegung in der zweiten Bewegungsrichtung (R₂) auf der Grundlage der Weginformation zur Bewegung der Bodenbearbeitungsmaschine (10) mit einem Versatz (V) zu dem durch die Weginformation repräsentierten Weg (W) bei Bewegung in der ersten Bewegungsrichtung (R₁) anzusteuern.

5. Selbstfahrende Bodenbearbeitungsmaschine nach einem der Ansprüche 1-4,
**dadurch gekennzeichnet, dass** die Ansteueranordnung (28) dazu ausgebildet ist, bei Vorliegen einer Übersteuern-Information die Ansteuerung des wenigstens einen Lenkaktuators (30) auf der Grundlage der Weginformation zu beenden,
vorzugsweise wobei die Übersteuern-Information eine eine Lenkbetätigung des Lenkorgans (26) repräsentierende Lenkeingriffsinformation oder/und eine eine Deaktivierung der Ansteueranordnung (28) zum Ansteuern des wenigstens einen Lenkaktuators (30) auf der Grundlage der Weginformation repräsentierende Deaktivierungsfunktion umfasst.

6. Verfahren zum Betreiben einer selbstfahrenden Bodenbearbeitungsmaschine, insbesondere Bodenverdichter, die Bodenbearbeitungsmaschine (10) umfassend ein Lenksystem (27) mit einem von einer Bedienperson (22) zu betätigenden Lenkorgan (26) und eine Ansteueranordnung (28) zum Ansteuern wenigstens eines Lenkaktuators (30) auf der Grundlage einer Betätigung des Lenkorgans (26), wobei das Verfahren die Maßnahmen umfasst:
a) bei Bewegung der Bodenbearbeitungsmaschine (10) in einer ersten Bewegungsrichtung (R₁), Erzeugen einer den bei der Bewegung der Bodenbearbeitungsmaschine (10) in der ersten Bewegungsrichtung (R₁) zurückgelegten Weg (W) repräsentierenden Weginformation,
b) bei Bewegung der Bodenbearbeitungsmaschine (10) in einer der ersten Bewegungsrichtung (R₁) im Wesentlichen entgegengesetzten zweiten Bewegungsrichtung (R₂), Ansteuern des wenigstens einen Lenkaktuators (30) vermittels der Ansteueranordnung (28) auf der Grundlage der Weginformation.

7. Verfahren nach Anspruch 6,
**dadurch gekennzeichnet, dass** die Maßnahmen a) und b) wiederholt alternierend durchgeführt werden,
vorzugsweise wobei bei einer wiederholten Durchführung der Maßnahme a) die erste Bewegungsrichtung (R₁) von der ersten Bewegungsrichtung (R₁) bei einer vorangehenden Durchführung der Maßnahme a) abweichen kann.

8. Verfahren nach Anspruch 6 oder 7,
**dadurch gekennzeichnet,**
**dass** bei der Maßnahme a) die Ansteueranordnung (28) den wenigstens einen Lenkaktuator (30) auf der Grundlage einer eine Betätigung des Lenkorgans (26) repräsentierenden Lenkinformation ansteuert,
oder/und
**dass** bei der Maßnahme a) das Erzeugen der Weginformation bei Erzeugung eines Weginformation-Erzeugungsbefehls gestartet wird.

9. Verfahren nach Anspruch 7 oder Anspruch 8, sofern auf Anspruch 7 rückbezogen,
**dadurch gekennzeichnet, dass** bei der Maßnahme a) das Erzeugen der Weginformation bei einer Bewegungsrichtungsumkehr der Bodenbearbeitungsmaschine (10) nach Bewegung der Bodenbearbeitungsmaschine (10) in der zweiten Bewegungsrichtung (R₂) bei einer unmittelbar vorangehenden Durchführung der Maßnahme b) gestartet wird.

10. Verfahren nach einem der Ansprüche 6-9,
**dadurch gekennzeichnet, dass** bei der Maßnahme b) die Ansteueranordnung (28) den wenigstens einen Lenkaktuator (30) auf der Grundlage der Weginformation zur Bewegung der Bodenbearbeitungsmaschine (10) mit einem Versatz (V) zu dem durch die Weginformation repräsentierten Weg (W) bei Bewegung der Bodenbearbeitungsmaschine (10) in der ersten Bewegungsrichtung (R₁) bei Durchführung der Maßnahme a) ansteuert, vorzugsweise wobei der Versatz (V) vor Durchführung der Maßnahme b), vorzugsweise vor Durchführung der Maßnahme a), bestimmt wird, oder/und dass der Versatz (V) bei Durchführung der Maßnahme b) unverändert bleibt.

11. Verfahren nach einem der Ansprüche 6-10,
**dadurch gekennzeichnet,**
**dass** die Maßnahme b) bei einer Bewegungsrichtungsumkehr der Bodenbearbeitungsmaschine (10) nach Bewegung der Bodenbearbeitungsmaschine (R) in der ersten Bewegungsrichtung (R₁) bei einer unmittelbar vorangehenden Durchführung der Maßnahme a) gestartet wird,
oder/und
**dass** die Maßnahme b) beendet wird, wenn bei Bewegung der Bodenbearbeitungsmaschine (10) in der zweiten Bewegungsrichtung (R₂) bei Durchführung der Maßnahme b) eine einer Startposition (S) der Bodenbearbeitungsmaschine bei einer unmittelbar vorangehenden Durchführung der Maßnahme a) zugeordnete Endposition (E) der Bodenbearbeitungsmaschine (10) erreicht wird.

12. Verfahren nach Anspruch 11,
**dadurch gekennzeichnet, dass** bei oder/und nach Erreichen der Endposition (E):
- ein das Erreichen der Endposition (E) indizierender Hinweis, vorzugsweise optischer Hinweis oder/und akustischer Hinweis oder/und Vibrations-Hinweis, erzeugt wird,
oder/und
- die Ansteueranordnung (28) den wenigstens einen Lenkaktuator (30) auf der Grundlage einer eine Betätigungsstellung des Lenkorgans (26) repräsentierenden Lenkinformation ansteuert.

13. Verfahren nach einem der Ansprüche 6-12,
**dadurch gekennzeichnet, dass** die Maßnahme b) bei Erzeugung einer Übersteuern-Information beendet wird,
vorzugsweise wobei die Übersteuern-Information erzeugt wird durch:
- eine Betätigung des Lenkorgans (26) während Durchführung der Maßnahme b),
oder/und
- eine Deaktivierung der Ansteueranordnung (28) zum Ansteuern des wenigstens einen Lenkaktuators auf der Grundlage der Weginformation.

14. Verfahren nach einem der Ansprüche 6-13,
**dadurch gekennzeichnet, dass** bei der Maßnahme a) die bei einer unmittelbar nachfolgenden Durchführung der Maßnahme b) zu nutzende Weginformation nur dann erzeugt wird, wenn die Bodenbearbeitungsmaschine (10) seit Beginn der Maßnahme a) eine vorbestimmte Mindestweglänge zurückgelegt hat.

15. Verfahren nach einem der Ansprüche 6-14,
**dadurch gekennzeichnet, dass** die Ansteueranordnung (28) bei der Durchführung der Maßnahmen a) und b) und nach der Beendigung der Maßnahme b) ein Antriebssystem (13) der Bodenbearbeitungsmaschine auf der Grundlage einer eine Betätigung eines Fahrorgans (33) repräsentierenden Fahrinformation ansteuert.
